Europäisches Patentamt

European Patent Office

Office européen des brevets

(11) Publication number: **0 455 180 A1**

# EUROPEAN PATENT APPLICATION

(21) Application number: 91106879.9

(22) Date of filing: 27.04.91

(51) Int. Cl.⁵: **B25B 13/48**, F16K 27/08,
B60C 29/06

(30) Priority: 30.04.90 FI 902183

(43) Date of publication of application:
06.11.91 Bulletin 91/45

(84) Designated Contracting States:
BE DE FR GB NL

(71) Applicant: Muhola, Heikki
Kassakumpu 5
SF-05100 Röykkä(FI)

(72) Inventor: Muhola, Heikki
Kassakumpu 5
SF-05100 Röykkä(FI)

(74) Representative: Zipse + Habersack
Kemnatenstrasse 49
W-8000 München 19(DE)

(54) **Tool for opening and closing the cap of the valve of an air-filled tyre.**

(57) The invention relates to a tool for opening and closing the cap of the valve of an air-filled tyre, comprising a tubelike shank and a gripper which is pressed onto the cap of the valve. The gripper, which forms the front part (3) of the tool, is provided with teeth (6) placed on its interior circumference longitudinally relative to the tool. The tool is so dimensioned that the outer diameter of its front part (3) is shorter than the outer diameter of its rear part (5), which forms the handle of the tool. Between the front and rear parts is a conical part (4) seamlessly joined with these.

FIG. 1

The present invention relates to a tool for opening and closing the cap of the valve of an air-filled tyre, said tool comprising a tubelike shank and a gripper which is pressed onto the cap of the valve.

Usually, to allow the air pressure in a tyre of a car, tractor or other vehicle to be checked or the tyre to be filled with air, the cap of the valve of the tyre must be opened manually. In favorable circumstances this is no problem, but it often happens that the valve cap cannot be removed with bare fingers because the cap is stuck to the valve because of dirt, ice, excessive tightening or long-time storage. In this case, it is necessary to use any tool that may serve the purpose, e.g. pliers. However, the width or design of many new ornamental hub caps is such that the valve is hidden deep inside the hub cap, making it difficult to access the valve cap or to grip it with sufficient force with the fingers. This difficulty is further aggravated by the fact that the valve is often placed in a very narrow hole, making it impossible to use tools such as pliers.

In addition to the difficulty of unscrewing the valve cap, another problem is that the cap is often dirty and wet, so one can easily soil one's hands when trying to open it with bare fingers, and, if one is not careful, this brings the further risk of the dirt getting from the fingers to the clothes or other objects susceptible to dirt.

Previously known techniques for the opening of a valve cap are represented by West-German utility design DE 89 11 931, which proposes a tubular tool whose one end widens conically over a short distance so that it fits onto a valve cap. In addition, the conical end is provided with three longitudinal slits forming three jags on the interior surface of the conical part to improve the grip of the tool. This solution provides help in the difficulties described above, but the structure is unreliable in operation. If the valve cap is very dirty or icy, the three jags alone will not ensure a sufficient grip. Besides, if the tool is made of a soft material, the jags may yield, in which case the tool will rotate on the valve cap without gripping. Similarly, a valve cap with ice or sand on it will quickly abrade the corners of the three jags so that the grip deteriorates and the tool becomes useless. On the other hand, if the tool is made of a hard material and has sharp jags, then the tool may damage a tightly stuck valve cap. A further drawback is the narrow shank. If the valve cap sits really tight, then it is possible that the tool will not provide a handgrip strong enough to enable the cap to be unscrewed.

The object of the present invention is to eliminate all the drawbacks mentioned above and to achieve a reliable and low-priced tool for the opening and closing of the cap of the valve of an air-filled tyre. The invention is characterized by what is presented in the claims.

The advantages of the tool of the invention are its reliability and versatility The tool enables the valve cap to be gripped securely even if it is located in a difficult place, and provides a sufficient torque to open the cap. Moreover, it is possible to keep various small objects inside the tool or to attach an air pressure gauge or a flask of de-icer in the rear part of the tool. This makes it possible to avoid a situation where many small objects lie helter-skelter in the vehicle and even to prevent them from getting lost.

In the following, the invention is described in detail by the aid of an example by referring to the attached drawings, in which

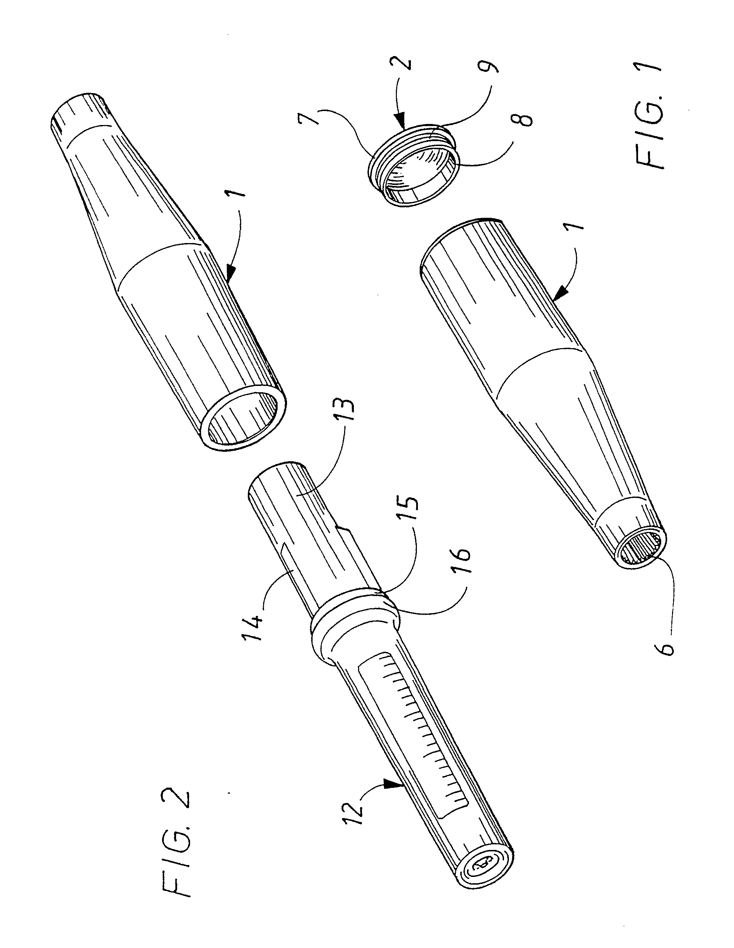

Fig. 1 presents the tool of the invention in axonometric projection, seen obliquely from the front and from above,

Fig. 2 presents the same tool and a pressure gauge designed to be mounted in it, in axonometric projection and seen obliquely from the rear and from above, and

Fig. 3 presents the same tool in side view and partly sectioned.

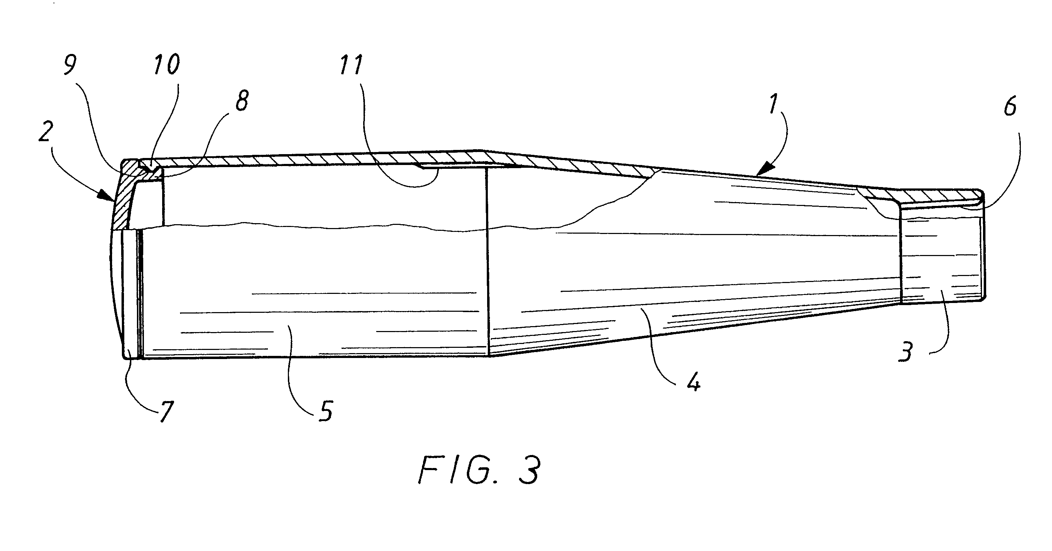

The body 1 of the tool is a tubular, hollow object. Its suitable length is between 70 - 150 mm, preferably 100 mm. The length must be sufficient to allow a valve cap placed deep in the wheel to be reached while still providing a sufficient handgrip of the tool. On the other hand, if the tool is too long, it will be difficult to store. That end of the tool which engages the valve cap is called the front end and, correspondingly, the other end is called the rear end. The tool is of a round form in cross-section and, in its longitudinal direction, it has two parts which have a fixed diameter throughout the length of the part. These parts are a front part 3 and a rear part 5 (see Fig.3). Between the front part 3 and the rear part 5 is a conical part 4 which has a changing outer diameter and is seamlessly and smoothly joined with both the front part and the rear part. At the juncture, the front part and the conical part have equal outer diameters, and similarly, the rear part and the conical part have equal outer diameters.

The length of the front part 3 is 8 - 20 mm, that of the conical part 4 is 40 - 80 mm and that of the rear part is 30 - 80 mm. In tests, it has been established that recommendable dimensions are 10 mm for the front part, 48 mm for the conical part and 42 mm for the rear part. The outer diameter of the front part is 10 - 17 mm and that of the rear part 16 - 30 mm. Outer diameters found good in the tests are approx. 14 mm for the front part and approx. 25 mm for the rear part. Right lengths, diameters and coning angle are significant in view of the fact that the tool must be capable of accessing valve caps in narrow slots while still having a sufficiently long and thick rear part to provide a firm handgrip.

The interior surface of the front part 3 is conical in the longitudinal direction of the tool in such manner that the inner diameter is slightly larger at the front end than at the rear end. The coning angle is 1 - 5° depending on the material of the tool. According to the tests, a suitable coning angle is 1.5°. In addition, the interior surface of the front part is provided with teeth over the whole circumference and extending through the whole length of the part, with even spaces between teeth. A suitable number of teeth is 12 - 40 to provide sufficient engagement between the teeth and the valve cap. The teeth 6 lie longitudinally relative to the tool and the grooves between them have the shape of a broad V. The angle between the sides of the teeth is essentially between 70 - 90°. The height of each tooth is 0.3 - 2 mm. The coning angle and tooth height are so selected as to suit the shapes and dimensions of the commonest valve caps to ensure that the tool will work properly. The front edge of the teeth 6 is provided with a rounding in the longitudinal direction of the teeth to ensure that the tool will be easily guided onto the valve cap. Similarly, the whole front edge of the front part is rounded on the inside.

The interior surface of the front end of the rear part 5 of the tool is provided with three protrusions 11 lying longitudinally relative to the tool. The protrusions are quite low and have a bevelled rear end. "Rear end" refers here to the same direction as in the case of the tool itself. The protrusions are placed at distances of 120° on the interior circumference and they protrude inwards in the tool, so that a cylindrical object inserted from the rear end of the tool will be wedged in between the protrusions 11 without touching the interior surface of the tool. This ensures that objects like a pressure gauge or a de-icer flask will be held firmly inside the tool.

The rear end of the rear part 5 is provided with a ringlike protrusion 10 on the interior circumference, the height of said protrusion being such that the inner diameter of the ringlike protrusion 10 is equal to the diameter of a circle drawn by the crests of the longitudinal protrusions 11. The height of the protrusions is 0.05 - 0.3 mm. The heights of the protrusion and the inner diameter of the rear part are so chosen that the commonest types of de-icer flask will be held firmly in place. The ringlike protrusion serves to keep the de-icer flask or pressure gauge more securely inside the tool. Another function of the ringlike protrusion 10 is to lock the rear cover 2 of the tool in position. The rear cover 2 has a short cylindrical part 8 fitting inside the rear part of the tool. The cylindrical part is provided with a ringlike groove 9 of a size and shape corresponding to those of the ringlike protrusion 10, the latter being locked in the groove when the rear cover 2 is inserted in place. The rear cover is provided with yet another short cylindrical part 7 with an outer diameter corresponding to that of the rear part of the tool. While lending rigidity to the tool, the rear cover also allows small objects to be kept inside the tool.

The rear part 5 of the tool 1 is hollow inside and its interior is provided with protrusions 10 and 11 in order to render the tool as versatile as possible. For example, an air pressure gauge 12 can be inserted into the tool so that it will be held firmly in place. The front end of the air pressure gauge is provided with a cylindrical part 13 which fits in the tool and is pressed against the protrusions 10 and 11 to a suitable tightness. To ensure a more secure hold, the air pressure gauge is provided with longitudinal protrusions 14 which correspond to protrusions 11 and are pressed against the interior surface of the tool when the gauge is inserted into the tool. In addition, the air pressure gauge is provided with a cylindrical part 15 corresponding to the cylindrical part 8 of the rear cover 2 and fitting inside the tool, and a cylindrical part 16 corresponding to cylindrical part 7 to prevent the air pressure gauge from being pushed too far into the tool. The air pressure gauge can be provided with a ringlike groove like that in the rear cover to lock it in place.

The thickness of the wall of both the conical part 4 and the rear part 5 is essentially uniform over the whole length of the part. A suitable wall thickness is 0.5 - 0.3 mm depending on the material.

It is obvious to a person skilled in the art that different embodiments of the invention are not restricted to the example described above, but that they may instead be varied within the scope of the following claims.

## Claims

1. Tool for opening and closing the cap of the valve of an air-filled tyre, said tool comprising a tubelike shank and a gripper which is pressed onto the cap of the valve, **characterized** in that the gripper, which forms the front part (3) of the tool, is provided with teeth (6) placed on its interior circumference longitudinally relative to the tool.

2. Tool according to claim 1, **characterized** in that the angle between the sides of the teeth is between 70 - 90° and that the teeth are placed side by side so that an essentially V-shaped groove is formed between them.

3. Tool according to claim 1 or 2, **characterized** in that the the front edge of the teeth (6) is provided with a rounding in the longitudinal direction of the teeth.

4. Tool according to claim 1, 2 or 3, **characterized** in that the outer diameter of the front part (3) of the tool is smaller than the outer diameter of the rear part (5), which forms the handle of the tool, and that between the front and rear parts is a conical part (4) seamlessly joined with these.

5. Tool according to any one of the previous claims, **characterized** in that the rear part (5) of the tool is hollow and so dimensioned that it can accommodate inside it an air pressure gauge (12), a de-icer flask or equivalent, and that the interior circumference of the rear part is provided with protrusions (10 and 11) designed to give a more secure hold of the object inserted.

6. Tool according to any one of the previous claims, **characterized** in that the rear part (5) of the tool is provided with a ringlike protrusion (10), and that the tool has a rear cover (2) provided with a groove (9) corresponding to the protrusion (10) to hold the cover in place.

FIG. 1

FIG. 2

FIG. 3

EP 0 455 180 A1

## DOCUMENTS CONSIDERED TO BE RELEVANT

EP 91106879.9

| Category | Citation of document with indication, where appropriate, of relevant passages | Relevant to claim | CLASSIFICATION OF THE APPLICATION (Int. Cl.5) |
|---|---|---|---|
| A | DE - A1 - 3 414 069 (MICHELS) * Claim 6 * | 1-5 | B 25 B 13/48 F 16 K 27/08 B 60 C 29/06 |
| A | DE - A1 - 3 300 033 (BERNAUER) * Fig. 1-8 * | 1,5,6 | |
| X | DE - A1 - 3 416 440 (KIENZLER) * Fig. 1; page 3, lines 5-25 * | 1,4 | |
| P,A | GB - A - 2 224 964 (COLLINS) * Fig. 2,3 * | 1 | |
| A | DE - A1 - 3 614 862 (LAAKMANN) * Fig. 1 * | 5,6 | |
| A | US - A - 3 025 734 (ASH) * Fig. 1 * | 1 | TECHNICAL FIELDS SEARCHED (Int. Cl.5) B 25 B 13/00 F 16 K 27/00 B 60 C 29/00 B 25 G 1/00 |

The present search report has been drawn up for all claims

| Place of search | Date of completion of the search | Examiner |
|---|---|---|
| VIENNA | 13-06-1991 | BENCZE |

EPO FORM 1503 03.82 (P0401)